# FASCICULE DE BREVET EUROPEEN

(11) **EP 2 950 741 B1**
(45) Date de publication et mention de la délivrance du brevet: **17.10.2018**
(21) Numéro de dépôt: 13734485.9
(22) Date de dépôt: 07.06.2013
(51) Int. Cl.: A61C 5/42

(54) **INSTRUMENT POUR L'ALESAGE DES CANAUX RADICULAIRES DENTAIRES**
INSTRUMENT ZUM BOHREN VON ZAHNWURZELKANÄLEN
INSTRUMENT FOR BORING DENTAL ROOT CANALS

(30) Priorité: 30.01.2013 WO PCT/IB2013/000108
(43) Date de publication de la demande: 09.12.2015
(60) Demande divisionnaire: 18190022.6
(73) Titulaire: Maillefer Instruments Holding S.À.R.L., 1338 Ballaigues (CH)
(72) Inventeur: ROTA, Gilbert, 25160 Vaux et Chantegrue (FR); VALLOTTON, Paul-Henri, 1142 Pampigny (CH)
(74) Mandataire: Micheli & Cie SA
(86) Numéro de dépôt international: PCT/IB2013/001191
(87) Numéro de publication internationale: WO 2014/118591

(56) Documents cités:
- DE-A1-102006 007 316
- US-A1- 2005 100 859
- US-A1- 2005 282 109
- US-A1- 2006 265 858

## Description

La présente invention a pour objet un instrument pour l'alésage des canaux radiculaires dentaires.

Le traitement d'une racine dentaire infectée se réalise par l'extraction de la pulpe à l'aide d'instruments spécifiques, puis par la mise en forme du canal radiculaire au moyen d'alésages successifs, traditionnellement réalisés à l'aide d'instruments de taille et de conicité variables. Une dernière opération consiste à obturer le canal radiculaire.

La mise en forme du canal radiculaire consiste dans un premier temps à réaliser un élargissement du canal dans ses parties coronaire et médiane pour permettre dans un second temps de traiter la partie apicale du canal plus facilement par un nettoyage mécanique des tissus infectés.

Un instrument destiné à l'alésage des canaux radiculaires dentaires présente généralement une tige effilée emmanchée dans un manche pour permettre son entraînement manuel ou mécanique et comprenant sur au moins une partie de sa longueur des goujures hélicoïdales à pas constant ou non et présentant au moins une arête de coupe.

Utilisé en rotation continue, ce genre d'instrument peut avoir tendance à se visser dans le canal. Outre le vissage, un autre problème intervenant dans la réalisation d'instruments pour l'alésage des canaux radiculaires est celui de la résistance et de la flexibilité des instruments. En effet, lorsque l'instrument est trop flexible, il risque de se plier ou de se casser avant que le praticien ait pu terminer l'opération et lorsque l'instrument est trop rigide, il ne suit que difficilement la courbure du canal radiculaire dentaire.

De nombreux instruments ont été développés pour répondre à ces problèmes. Le document EP 1 361 831 décrit un instrument pour l'alésage des canaux dentaires comportant une base, un tronçon de coupe et un tronçon de guidage, le tronçon de coupe étant délimité par une enveloppe de forme cylindrique ou conique dont l'axe longitudinal est confondu avec l'axe de rotation de l'instrument. Le tronçon de coupe présente des zones de dégagement disposées en retrait par rapport à l'enveloppe alternant avec des zones d'alésage disposées sur ladite enveloppe. Cette alternance de zones sur l'enveloppe et en retrait de l'enveloppe permet de réduire le risque de vissage de l'instrument dans le canal dentaire. De plus, l'axe du tronçon de coupe peut être décalé par rapport à l'axe de l'enveloppe. Cela permet d'approfondir les zones de dégagement et de rendre plus efficace l'évacuation des copeaux en cours de traitement.

Le document US 7 955 078 décrit un instrument endodontique pour la préparation des canaux radiculaires dentaires comprenant un corps configuré pour tourner autour d'un axe de rotation. Le corps comprend un centre de masse qui n'est pas situé sur l'axe de rotation de l'instrument donnant ainsi à l'instrument une impression d'ondulation (« swagger ») lors de sa mise en rotation. Un tel instrument présente une meilleure flexibilité et permet ainsi de suivre au mieux les courbes complexes d'un canal radiculaire dentaire.

Cependant, dans ces deux documents, l'axe de la partie active est décalé par rapport à l'axe de rotation de l'instrument sur toute la longueur de ladite partie active et en particulier, l'axe de la pointe de l'instrument est décalé. Cela peut générer un phénomène de battement de la pointe dans le canal. Il devient alors difficile d'assurer une dimension optimale du canal lors du traitement, notamment dans sa partie apicale. De plus, une pointe dont l'axe est décalé a encore comme inconvénient de repousser les débris vers la partie apicale plutôt que de les évacuer vers le haut du canal.

US 2006/265858 A1 divulgue deux façons de réaliser un instrument endodontique: une avec partie active ayant un centre de masse sur l'axe de rotation, et une autre avec partie active ayant un centre de masse décalé par rapport à l'axe de rotation.

US 2005/100859 A1 divulgue un instrument endodontique avec une partie active ayant la partie distale s'étendant depuis la pointe ayant un centre de masse décalé par rapport à l'axe de rotation et une partie proximale de la partie active ayant un centre de masse sur l'axe de rotation dudit instrument.

Le but de la présente invention est de réaliser un instrument pour l'alésage des canaux radiculaires dentaires qui obvie aux inconvénients précités. En particulier, un but de la présente invention est donc de réaliser un instrument qui soit flexible tout en étant résistant, fiable et efficace et qui permette à la fois de respecter la trajectoire initiale du canal radiculaire à traiter et de garantir une dimension optimale du canal dans sa partie apicale après traitement.

La présente invention a pour objet un instrument pour l'alésage des canaux radiculaires dentaires selon la revendication 1.

Les dessins illustrent schématiquement et à titre d'exemple plusieurs formes d'exécution de l'instrument selon l'invention.
La figure 1 illustre une première forme d'exécution d'un instrument pour l'alésage des canaux radiculaires dentaires selon l'invention.
La figure 2 est une vue en coupe selon la ligne II-II de l'instrument illustré à la figure 1.
La figure 3 est une vue en coupe selon la ligne III-III de l'instrument illustré à la figure 1.
La figure 4 est une vue en coupe selon la ligne IV-IV de l'instrument illustré à la figure 1.
La figure 5 illustre une seconde forme d'exécution d'un instrument pour l'alésage des canaux radiculaires dentaires selon l'invention.
La figure 6 est une vue en coupe selon la ligne VI-VI de l'instrument illustré à la figure 5.
La figure 7 est une vue en coupe selon la ligne VII-VII de l'instrument illustré à la figure 5.
La figure 8 illustre une troisième forme d'exécution d'un instrument pour l'alésage des canaux radiculaires dentaires selon l'invention.
La figure 9 est une vue en coupe selon la ligne A-A de l'instrument illustré à la figure 8.
La figure 10 est une vue en coupe selon la ligne B-B de l'instrument illustré à la figure 8.
La figure 11 est une vue en coupe selon la ligne C-C de l'instrument illustré à la figure 8.
La figure 12 est une vue en coupe selon la ligne D-D de l'instrument illustré à la figure 8.
La figure 13 est une vue en coupe selon la ligne E-E de l'instrument illustré à la figure 8.
La figure 14 est une vue en coupe selon la ligne F-F de l'instrument illustré à la figure 8.

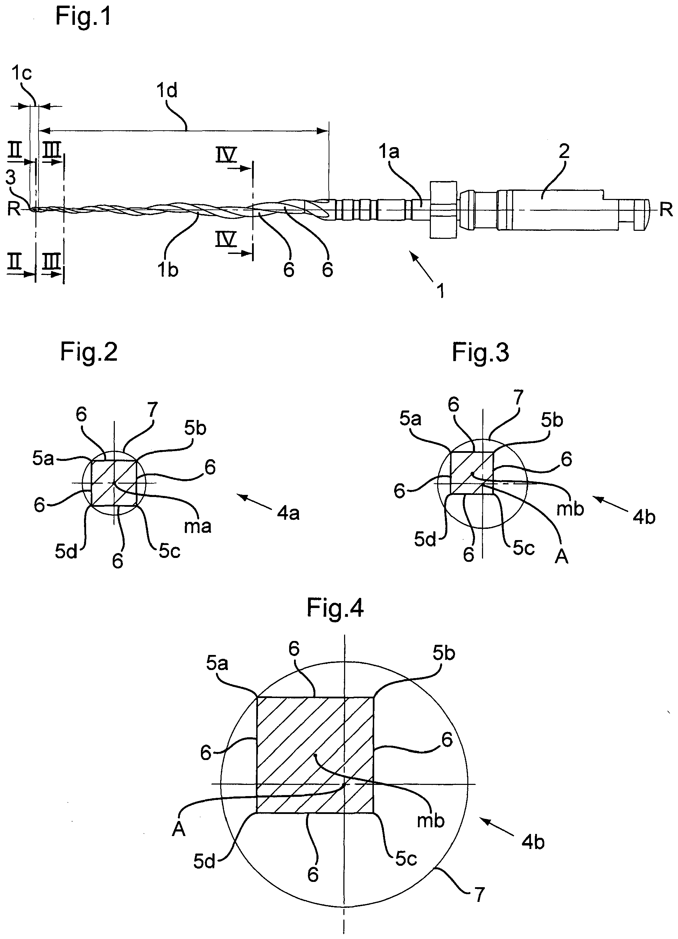

Dans une première forme d'exécution illustrée à la figure 1, l'instrument selon l'invention comprend une tige 1 emmanchée à une de ses extrémités 1a dans un manche 2 permettant soit l'actionnement manuel de l'instrument soit, de préférence, son engagement dans une pièce à main assurant l'entraînement mécanique dudit instrument. En particulier, l'instrument 1 est destiné à être entraîné en rotation autour de son axe de rotation R.

La tige 1 présente une partie active 1b s'étendant jusqu'à l'autre extrémité 3, dite pointe 3, de la tige 1. Ladite partie active 1b est de préférence effilée et conique, s'amincissant jusqu'à la pointe 3 de la tige 1. En variante, la partie active 1b ou l'entier de la tige 1 pourraient être cylindriques plutôt que coniques.

La partie active 1b présente une section polygonale (dont les côtés sont droits ou courbes) et comporte des arêtes de coupe. Plus particulièrement dans cette première forme d'exécution, la partie active 1b présente sur toute sa longueur une section carrée 4 formant quatre arêtes de coupe 5a, 5b, 5c, 5d définissant entre elles quatre goujures 6 de forme hélicoïdale, une goujure étant la face définie entre deux arêtes de coupe successives de la partie active 1b. La partie active 1b est délimitée par une enveloppe 7 sensiblement tronconique et dont l'axe longitudinal est confondu avec l'axe de rotation R de l'instrument.

La particularité de l'instrument selon l'invention réside dans le fait que la partie active 1b présente une première portion 1c s'étendant à partir de la pointe 3 en direction de l'arrière de la partie active 1b et dont le centre de masse se trouve sur l'axe de rotation R de l'instrument et une seconde portion 1d s'étendant depuis la fin de la première portion 1c jusqu'à l'arrière de la partie active 1b et dont au moins une section présente un centre de masse qui n'est pas sur l'axe de rotation R de l'instrument mais est décalé par rapport audit axe R. Dans la première forme d'exécution illustrée aux figures 1 à 4, toute section de la seconde portion 1d de la partie active 1b de l'instrument 1 présente un centre de masse qui n'est pas sur l'axe de rotation R mais qui est décalé par rapport audit axe.

Plus précisément et comme illustré à la figure 2, selon l'invention, toute section 4a de la première portion 1c a son centre de masse ma sur l'axe de rotation R de l'instrument. De plus, dans cette première forme d'exécution, les quatre arêtes 5a, 5b, 5c, 5d d'une telle section 4a se trouvent sur l'enveloppe 7. Ainsi, la première portion 1c et en particulier la pointe 3 sont centrées par rapport à l'axe de rotation R de l'instrument ou en d'autres termes encore, l'axe longitudinal de la première portion 1c est confondu avec ledit axe de rotation R.

Comme illustré sur les figures 3 et 4, dans la première forme d'exécution, toute section 4b de la seconde portion 1d de la partie active 1b a son centre de masse mb décalé par rapport à l'axe de rotation R de l'instrument et de préférence, une seule arête de coupe 5a d'une telle section 4b se trouve sur l'enveloppe 7, les autres arêtes de coupe 5b, 5c et 5d étant disposées à l'intérieur de ladite enveloppe 7. Ainsi, dans la première forme d'exécution, l'entier de la seconde portion 1d de la partie active 1b est décentré par rapport à l'axe de rotation R de l'instrument.

Ainsi, on obtient un instrument efficace car sa pointe 3 est centrée, ne génère pas de battement dans le canal et présente quatre arêtes de coupe actives.

Un tel instrument selon l'invention peut être obtenu à partir d'une tige de section circulaire, de préférence en un alliage de nickel titane, en y ménageant par usinage (meulage) des goujures hélicoïdales définissant des arêtes de coupe de sorte que la section de la tige 1 soit polygonale sur toute la longueur de sa partie active 1b. Pour réaliser la géométrie particulière de la partie active 1b selon l'invention, les goujures 6 de la seconde portion 1d de la partie active 1b sont surtaillées par rapport aux goujures 6 de la première portion 1c pour obtenir au moins une section 4b de ladite seconde portion 1d dont au moins une arête de coupe est en retrait dans l'enveloppe 7 et dont le centre de masse mb est décalé par rapport à l'axe de rotation R. Ainsi, sur la seconde portion 1d de la partie active 1b de la matière est retirée à l'instrument selon l'invention ce qui le rend plus flexible sur cette seconde portion qu'un instrument traditionnel qui présenterait sur toute sa partie active une section dont le centre de masse est centré sur l'axe de rotation et dont toutes les arêtes sont inscrites sur l'enveloppe. Grâce à la présente invention, on obtient donc un instrument efficace à sa pointe 3 tout en étant flexible.

De préférence, dans la première forme d'exécution, la seconde portion 1d présente un décalage progressif par rapport à l'axe de rotation R en direction de l'arrière de l'instrument : c'est-à-dire qu'une section de la seconde portion 1d proche de la pointe a son centre de masse moins décalé proportionnellement à la surface de la section par rapport audit axe de rotation R qu'une section de la seconde portion 1d plus proche de l'arrière de l'instrument. En terme d'usinage de l'instrument, cela se traduit par des goujures 6 proportionnellement de plus en plus surtaillées le long de la seconde portion 1d de la partie active 1b par rapport au goujures de la première portion 1c. Ainsi dans cette première forme d'exécution, la flexibilité de l'instrument est ajustable et en particulier, augmente progressivement vers l'arrière de la partie active 1b.

De préférence également, la première portion 1c de la partie active s'étend sur une longueur de 3 millimètres partant de la pointe 3 de la partie active 1b. De manière encore plus privilégiée, ladite première portion 1c a une longueur de 1 millimètre.

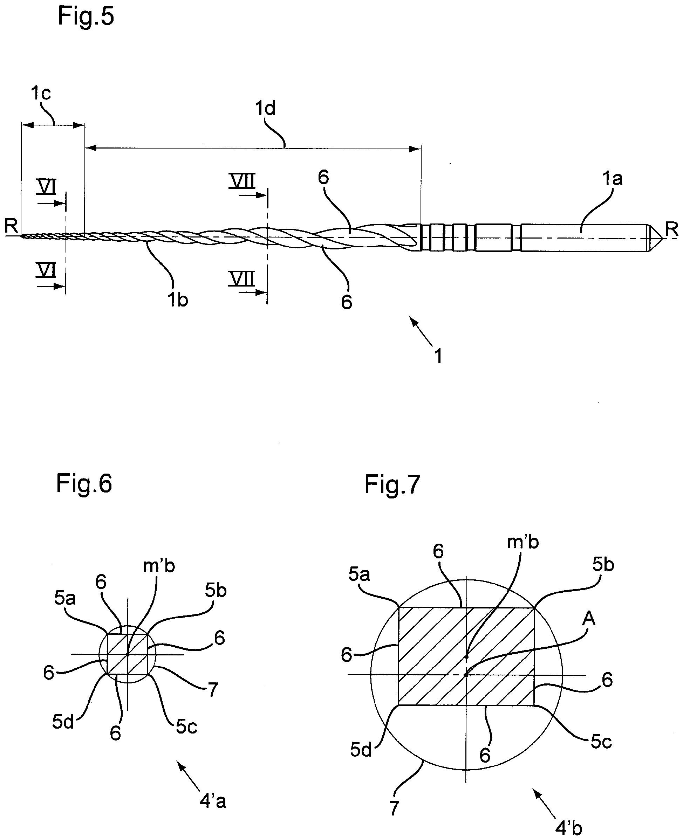

Les figures 5 à 7 illustrent une seconde forme d'exécution d'un instrument selon l'invention dans laquelle la partie active 1b présente sur toute sa longueur une section rectangulaire 4' formant quatre arêtes de coupe 5a, 5b, 5c, 5d définissant quatre goujures 6 de forme hélicoïdale, une goujure étant la face définie entre deux arêtes de coupe successives de la partie active 1b. Comme dans la première forme d'exécution, la partie active 1b est délimitée par une enveloppe 7 sensiblement tronconique et ayant pour axe longitudinal l'axe de rotation R de l'instrument.

La partie active 1b présente également une première portion 1c s'étendant depuis la pointe 3 en direction de l'arrière de la partie active 1b et dont le centre de masse se trouve sur l'axe de rotation R de l'instrument et une seconde portion 1d s'étendant depuis la fin de la première portion 1c jusqu'à l'arrière de la partie active 1b et dont au moins une section présente un centre de masse décalé par rapport à l'axe de rotation R de l'instrument. De préférence et comme dans la première forme d'exécution, toute section de la seconde portion 1d de l'instrument selon la seconde forme d'exécution présente un centre de masse décalé par rapport à l'axe de rotation R.

Dans cette deuxième forme d'exécution et comme illustré à la figure 6, toute section 4'a de la première portion 1c est carrée et a son centre de masse m'a sur l'axe de rotation R de l'instrument. De plus, les quatre arêtes 5a, 5b, 5c, 5d d'une telle section 4'a se trouvent sur l'enveloppe 7 de l'instrument. Comme illustré sur la figure 7, toute section 4'b de la seconde portion 1d de la partie active 1b a son centre de masse m'b décalé par rapport à l'axe de rotation R de l'instrument. Contrairement à la première forme d'exécution, pour chaque section 4'b de la seconde portion 1d de la partie active 1c de l'instrument selon la seconde forme d'exécution deux arêtes de coupe 5a et 5b sont sur l'enveloppe 7, les deux autres arêtes de coupe 5c et 5d étant disposées à l'intérieur de ladite enveloppe 7.

Les autres considérations se rapportant à la première forme d'exécution restent valables pour cette seconde forme d'exécution.

Comme illustré aux figures 6 et 7, les sections 4'a et 4'b des première et seconde portions 1c, 1d ne sont pas forcément symétriques, la section 4'a étant de préférence carrée tandis que la section 4'b peut être rectangulaire.

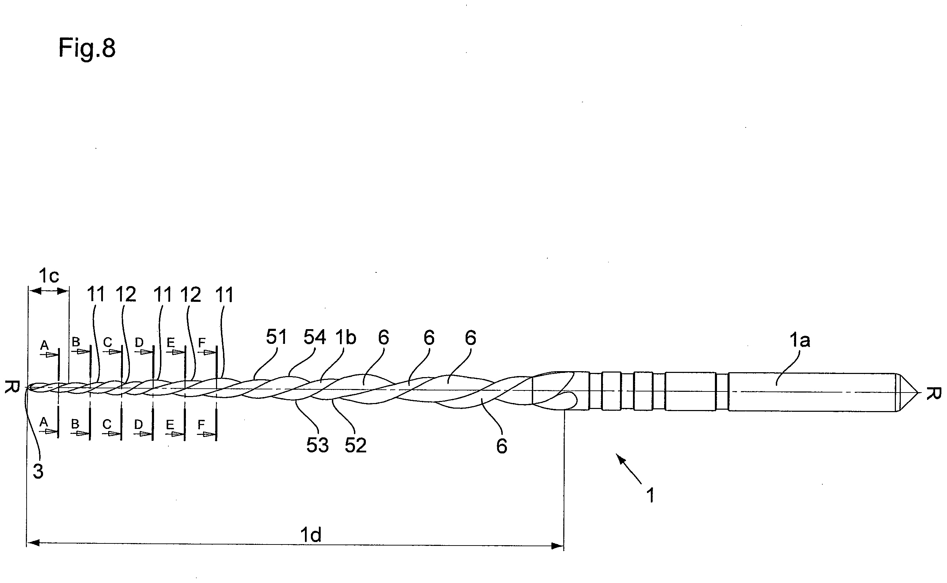

Les figures 8 à 14 illustrent une troisième forme d'exécution d'un instrument selon l'invention dans laquelle la partie active 1b de l'instrument présente sur toute sa longueur une section polygonale 40 de forme parallélogramme formant quatre arêtes de coupe 51, 52, 53, 54 définissant quatre goujures 6 de forme hélicoïdale, une goujure étant la face définie entre deux arêtes de coupe successives de la partie active 1b. Comme dans les formes d'exécution précédente, la partie active 1b est délimitée par une enveloppe 7 sensiblement tronconique et ayant pour axe longitudinal l'axe de rotation R de l'instrument.

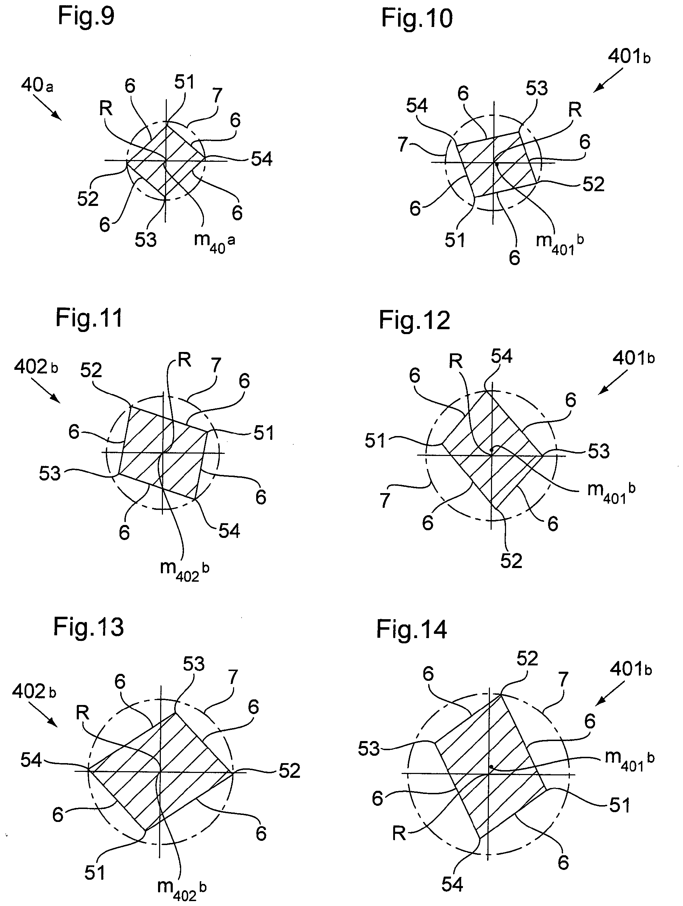

Selon l'invention, la partie active 1b présente une première portion 1c s'étendant depuis la pointe 3 en direction de l'arrière de la partie active 1b et dont le centre de masse se trouve sur l'axe de rotation R de l'instrument. Dans cette troisième forme d'exécution et comme illustré à la figure 9, toute section 40a de la première portion 1c est de forme parallélogramme et a son centre de masse m₄₀a sur l'axe de rotation R de l'instrument. De plus, dans cette forme d'exécution, deux arêtes de coupe diagonalement opposées 52, 54 d'une telle section 40a se trouvent sur l'enveloppe 7 de l'instrument tandis que l'autre paire d'arêtes de coupe diagonalement opposées 51, 53 se trouve en retrait à l'intérieur de l'enveloppe 7.

Selon l'invention, la partie active 1b présente en outre une seconde portion 1d s'étendant depuis la fin de la première portion 1c jusqu'à l'arrière de la partie active 1b dont au moins une section comprend un centre de masse qui n'est pas sur l'axe de rotation R de l'instrument mais qui est décalé par rapport audit axe R. Dans la troisième forme d'exécution de l'invention et comme illustré aux figures 8 et 10 à 14, la seconde portion 1d présente en alternance des premières zones, dites zones décentrées 11, dans lesquelles toute section 401b présente un centre de masse m₄₀₁b décalé par rapport à l'axe de rotation R de l'instrument et des secondes zones, dites zones centrées 12, dans lesquelles toute section 402b présente une centre de masse m₄₀₂b se trouvant sur l'axe de rotation R de l'instrument. La zone de la seconde portion 1d directement adjacente à la première portion 1c de la partie active 1b de l'instrument est une zone décentrée 11 (voir figure 8).

Les figures 11 et 13 illustrent chacune une section 402b d'une zone centrée 12 située le long de la seconde portion 1d de la partie active 1b de l'instrument, tandis que les figures 10, 12 et 14 illustrent chacune une section 401b d'une zone décentrée 11 située le long de ladite seconde portion 1d.

De préférence et comme illustré aux figures 11 et 13, pour chaque section 402b d'une zone centrée 12, deux arêtes de coupe diagonalement opposées 52, 54 se trouvent sur l'enveloppe 7 de l'instrument tandis que l'autre paire d'arêtes de coupe diagonalement opposées 51, 53 se trouve en retrait à l'intérieur de l'enveloppe 7.

De même, de préférence et comme illustré aux figures 10, 12 et 14, pour chaque section 401b d'une zone décentrée 11, une seule arête de coupe 52, 54 appartenant à la paire d'arêtes de coupe diagonalement opposées 52, 54 se trouvant sur l'enveloppe le long de la première portion 1c de la partie active 1b de l'instrument se trouve sur l'enveloppe 7 de l'instrument tandis que les autres arêtes de coupe se trouvent en retrait à l'intérieur de l'enveloppe 7.

Ainsi, outre l'alternance entre les zones centrées 12 et décentrées 11 sur la seconde portion 1d de la partie active 1b de l'instrument, dans cette troisième forme d'exécution, ladite seconde portion 1d présente également une alternance entre les arêtes de coupe se trouvant sur l'enveloppe. La succession des zones différentes sur la seconde section 1d de l'instrument selon la troisième forme d'exécution peut donc être décrite comme suit :
• La première zone de la seconde portion 1d immédiatement adjacente à la première portion 1c de la partie active 1b de l'instrument est une zone décentrée 11. Pour chaque section 401b de cette zone décentré 11, seule l'une des deux arêtes de coupe diagonalement opposées 52, 54 se trouvant sur l'enveloppe 7 pour toute section 40a de la première portion 1c, dite première arête de coupe 52, se trouve sur l'enveloppe 7 de l'instrument, la seconde de ces arêtes de coupe 54 et la seconde paire d'arêtes de coupe diagonalement opposées 51, 53 étant en retrait à l'intérieur de l'enveloppe 7 (figure 10) ;
• La deuxième zone est une zone centrée 12. Pour chaque section 402b de cette zone centrée 12, les première et seconde arêtes de coupe diagonalement opposées 52, 54 sont à nouveau sur l'enveloppe 7 de l'instrument, la seconde paire d'arêtes diagonalement opposées 51, 53 étant toujours en retrait à l'intérieur de l'enveloppe 7 (figure 11) ;
• La troisième zone est à nouveau une zone décentrée 11. Mais, dans cette zone, la seconde arête de coupe 54 diagonalement opposée à la première 52 et qui était en retrait dans l'enveloppe sur la première zone se trouve à présent sur l'enveloppe 7 tandis que la première arête de coupe 52 se trouve alors à l'intérieur de l'enveloppe 7, la seconde paire d'arêtes de coupe diagonalement opposées 51, 53 étant toujours en retrait à l'intérieur de l'enveloppe 7 (figure 12).

La zone suivante illustrée à la figure 13 est similaire à la première zone et l'alternance se poursuit ainsi le long de la seconde portion 1d de la partie active 1b de l'instrument.

Ainsi, l'instrument selon la troisième forme d'exécution présente deux arêtes de coupe 52, 54 qui se trouvent sur l'enveloppe pour toute section 40a de la première portion 1c de la partie active 1b et pour toute section 402b des zones centrées 12 de la seconde portion 1d de la partie active 1b mais dont au moins une des deux est en retrait dans l'enveloppe 7 pour toute section 401b d'une zone décentrée 11 de la seconde portion 1d, deux zones décentrées 11 séparées par une zone centrée 12 ne présentant pas la même arête de coupe sur l'enveloppe 7.

En variantes, la seconde paire d'arêtes de coupe diagonalement opposées 51, 53 pourrait se trouver sur l'enveloppe 7 de l'instrument pour toute section de la partie active 1b ou pour toute section de la première portion 1c ou pour toute section centrée 12 de la seconde portion 1d. La seconde paire d'arêtes de coupe diagonalement opposées 51, 53 pourrait également suivre la même alternance décrite ci-dessus que la première paire d'arêtes de coupe 52, 54 le long de la seconde portion 1d de la partie active 1b de l'instrument.

Les autres considérations se rapportant aux deux premières formes d'exécution restent valables pour cette troisième forme d'exécution.

En particulier, la première portion 1c de la partie active s'étend de préférence sur une longueur de 3 millimètres partant de la pointe 3 de la partie active 1b. De manière encore plus privilégiée, ladite première portion 1c a une longueur de 1 millimètre.

Ainsi, tout comme dans les deux premières formes d'exécution décrites ci-dessus, l'instrument selon la troisième forme d'exécution est efficace puisqu'il présente une pointe 3 centrée qui ne génère pas de battements dans le canal et permet une mise en forme précise dudit canal. Ledit instrument est également flexible à l'arrière de par la présence des zones décentrées sur la seconde portion 1d de sa partie active 1b. Cependant, contrairement aux deux premières formes d'exécution dans lesquelles l'entier de la seconde portion 1d est décentré et donc risque de générer un phénomène de battement à l'arrière de l'instrument, l'alternance de zones centrées et décentrées telle que décrite dans la troisième forme d'exécution permet d'assurer la flexibilité de l'instrument tout en évitant les battements en garantissant la forme de l'enveloppe générée par l'instrument en rotation. Ainsi, l'instrument selon la troisième forme d'exécution conserve tous les avantages décrits en relation avec les deux premières formes d'exécution tout en diminuant le phénomène de battement à l'arrière de l'instrument, phénomène qui pourrait nuire à la précision et à la rapidité du traitement du canal radiculaire dentaire.

Les formes d'exécution présentées ci-dessus décrivent des sections polygonales dont les côtés sont droits. Il est évident que lesdits côtés pourraient être courbes. Par conséquent, il faut comprendre le terme « polygonal » dans son sens général signifiant « qui a plusieurs angles » et couvrant indifféremment une forme géométrique dont les côtés sont droits ou courbes.

De façon évidente, l'instrument selon l'invention pourrait présenter d'autres caractéristiques connues comme une conicité variable. De même, les goujures peuvent être orientées indifféremment à droite ou à gauche ou encore présenter un pas d'hélice variable.

De manière générale, la partie active d'un instrument selon l'invention présente sur toute sa longueur une section polygonale formant au moins deux arêtes de coupe. La partie active est délimitée par une enveloppe essentiellement conique ou cylindrique dont l'axe longitudinal est confondu avec l'axe de rotation de l'instrument. La partie active comporte une première portion s'étendant depuis la pointe de l'instrument et qui est telle que toute section de cette première portion a son centre de masse sur l'axe de l'enveloppe et définit au moins deux arêtes de coupe qui se trouvent toutes sur ladite enveloppe. La partie active comporte en outre une seconde portion s'étendant à la suite de la première portion vers l'arrière de la partie active et qui est telle qu'au moins une section de cette seconde portion a un centre de masse qui n'est pas sur l'axe de l'enveloppe mais qui est décalé par rapport à cet axe et définit des arêtes de coupe dont au moins une se trouve sur l'enveloppe et au moins une se trouve en retrait à l'intérieur de ladite enveloppe.

L'instrument selon l'invention présente donc une pointe centrée par rapport à l'axe de rotation de l'instrument et une partie arrière dont au moins une section est décentrée. La pointe centrée permet de respecter la trajectoire initiale du canal radiculaire, d'éviter tout phénomène de battement dans ledit canal aux environs de la pointe et ainsi d'assurer la dimension de la préparation de la partie apicale du canal. De plus, la pointe centrée évite la descente des débris vers ladite partie apicale du canal et contribue à leur bonne évacuation. Cette évacuation est encore facilitée par le fait qu'au moins une section de la partie arrière est décentrée : les débris ont en effet plus de place pour être entraînés hors du canal et le décentrage d'au moins une section de la partie arrière de l'instrument crée un effet dynamique qui remonte les débris hors du canal.

De plus, un instrument selon la présente invention permet d'assurer la résistance de la partie proche de la pointe pour ainsi diminuer le risque de casse de l'instrument dans sa portion la plus fragile. La flexibilité de l'instrument n'est pas pour autant sacrifiée, puisque la seconde portion présentant au moins une section décentrée de l'instrument rend celui-ci flexible et que cette flexibilité peut même être progressive en allant vers l'arrière de l'instrument soit en ajustant le décentrage de la seconde portion de la partie active de l'instrument comme décrit dans le cas de la première et la seconde formes d'exécution soit en alternant section centrée et section décentrée le long de la seconde portion de la partie active de l'instrument comme décrit dans la troisième forme d'exécution. Ainsi, l'instrument peut être rendu suffisamment flexible pour suivre le contour complexe d'un canal radiculaire dentaire.

Finalement, les arêtes de coupe actives à la pointe de l'instrument, c'est-à-dire celles qui se trouvent sur l'enveloppe, garantissent la bonne efficacité de l'instrument. A l'arrière, les zones de contact de l'instrument sont diminuées puisque certaines des arêtes sont situées en retrait dans l'enveloppe de l'instrument ce qui permet de diminuer l'effet de vissage et les efforts superflus sur la partie arrière de l'instrument.

Ainsi, on réalise un instrument performant présentant un bon équilibre entre efficacité, flexibilité et résistance à la casse et à l'effet de vissage.

## Revendications

1. Instrument pour l'alésage des canaux radiculaires dentaires comprenant une tige effilée (1) présentant sur au moins une partie de sa longueur, appelée partie active (1b), une section polygonale (4) formant au moins deux arêtes de coupe (5a, 5b ; 52, 54), ladite partie active (1b) se terminant par une pointe (3) et étant délimitée par une enveloppe (7) de forme cylindrique ou conique dont l'axe longitudinal est confondu avec l'axe de rotation (R) de l'instrument, ladite partie active (1b) comportant une première portion (1c) s'étendant depuis la pointe (3) et une seconde portion (1d) s'étendant à la suite de la première portion (1c) vers l'arrière de la partie active (1b), ledit instrument étant **caractérisé en ce que** toute section (4a ; 4'a ; 40a) de la première portion (1c) présente un centre de masse (ma ;m'a ; m₄₀a) situé sur l'axe de rotation (R) et que lesdites au moins deux arêtes de coupe (5a, 5b ; 52, 54) définies par ladite section (4a ; 4'a ; 40a) se trouvent sur l'enveloppe (7) ; et par le fait qu'au moins une section (4b ;4'b ;401b) de la seconde portion (1d) présente un centre de masse (mb ; m'b ; m₄₀₁b) décalé par rapport à l'axe de rotation (R) et au moins une arête de coupe (5a ; 52, 54) définie par ladite section (4b ;4'b ;401b) est située en retrait à l'intérieur de l'enveloppe (7).

2. Instrument selon la revendication 1, **caractérisé par le fait que** toute section (4b ;4'b) de la seconde portion (1d) présente un centre de masse (mb ;m'b) décalé par rapport à l'axe de rotation (R) et au moins une arête de coupe (5a) définie par ladite section (4b ;4'b) est située en retrait à l'intérieur de l'enveloppe (7).

3. Instrument selon la revendication 2, **caractérisé par le fait qu'**exactement une arête de coupe (5a) définie par toute section (4b) de la seconde portion (1d) de la partie active (1b) se trouve sur l'enveloppe (7).

4. Instrument selon l'une des revendications 2 ou 3, **caractérisé par le fait qu'**une section (4b) de la seconde portion (1d) de la partie active (1b) située proche de la pointe (3) présente un centre de masse (mb) proportionnellement plus proche de l'axe de rotation (R) que le centre de masse d'une section de ladite seconde portion (1d) située à l'arrière de la partie active (1b).

5. Instrument selon la revendication 1, **caractérisé par le fait que** la seconde portion (1d) comprend en alternance des zones centrées (12) dans lesquelles toute section (402b) présente un centre de masse (m₄₀₂b) sur l'axe de rotation (R) et lesdites au moins deux arêtes de coupe (52, 54) définies par ladite section (402b) se trouvent sur l'enveloppe (7) et des zones décentrées (11) dans lesquelles toute section (401b) présente un centre de masse (m₄₀₁b) décalé par rapport audit axe de rotation (R) et au moins une arête de coupe (52, 54) définie par ladite section (401b) est située en retrait à l'intérieur de l'enveloppe (7).

6. Instrument selon la revendication 5, **caractérisé par le fait que** les zones décentrées (11) alternent entre des premières zones dans lesquelles pour toute section (401b), une première (52) des au moins deux arêtes de coupe (52, 54) définies par ladite section est située en retrait à l'intérieur de l'enveloppe (7) tandis que la seconde (54) des au moins deux arêtes de coupe se trouve sur l'enveloppe (7) et des secondes zones dans lesquelles pour toute section, la seconde (54) des au moins deux arêtes de coupe (52) définies par ladite section est située en retrait à l'intérieur de l'enveloppe (7) tandis que la première (52) se trouve sur l'enveloppe (7).

7. Instrument selon l'une des revendications précédentes, **caractérisé par le fait que** la partie active (1b) présente sur toute sa longueur une section polygonale à côté droit.

8. Instrument selon l'une des revendications précédentes, **caractérisé par le fait que** la première portion (1c) de la partie active (1b) présente une section carrée et que la seconde portion (1d) de la partie active présente une section rectangulaire.

9. Instrument selon l'une des revendications précédentes, **caractérisé par le fait que** la première portion (1c) de la partie active (1b) a une longueur comprise entre 1 et 3 millimètres.

## Patentansprüche

1. Instrument zum Bohren von Zahnwurzelkanälen, umfassend eine verjüngte Stange (1), die auf mindestens einem Teil ihrer Länge, der aktiver Teil (1b) genannt wird, einen polygonalen Querschnitt (4) aufweist, der mindestens zwei Schneidkanten (5a, 5b; 52, 54) bildet, wobei der aktive Teil (1b) in einer Spitze (3) endet und durch eine Hülle (7) von zylindrischen oder konischer Form begrenzt ist, deren Längsachse mit der Drehachse (R) des Instruments zusammenfällt, wobei der aktive Teil (1b) einen ersten Abschnitt (1c), der sich von der Spitze (3) erstreckt, und einen zweiten Abschnitt (1d) aufweist, der sich im Anschluss an den ersten Abschnitt (1c) in Richtung der Rückseite des aktiven Teils (1b) erstreckt, wobei das Instrument **dadurch gekennzeichnet ist, dass** jeder Bereich (4a; 4'a; 40a) des ersten Abschnitts (1c) einen Massenmittelpunkt (ma; m'a; m₄₀a) aufweist, der auf der Drehachse (R) angeordnet ist, und dass sich die mindestens zwei Schneidkanten (5a, 5b; 52, 54), die durch den Bereich (4a; 4'a; 40a) definiert sind, auf der Hülle (7) befinden; und dadurch, dass mindestens ein Bereich (4b; 4'b; 401b) des zweiten Abschnitts (1d) einen Massenmittelpunkt (mb; m'b; m₄₀₁b) aufweist, der gegenüber der Drehachse (R) versetzt ist, und mindestens eine Schneidkante (5a; 52, 54), die durch den Bereich (4b; 4'b; 401b) definiert ist, im Inneren der Hülle (7) angeordnet ist.

2. Instrument nach Anspruch 1, **dadurch gekennzeichnet, dass** der gesamte Bereich (4b; 4'b) des zweiten Abschnitts (1d) einen Massenmittelpunkt (mb; m'b) aufweist, der gegenüber der Drehachse (R) versetzt ist, und mindestens eine Schneidkante (5a), die durch den Bereich (4b; 4'b) definiert ist, im Inneren der Hülle (7) zurückgesetzt ist.

3. Instrument nach Anspruch 2, **dadurch gekennzeichnet, dass** sich genau eine Schneidkante (5a), die durch den gesamten Bereich (4b) des zweiten Abschnitts (1d) des aktiven Teils (1b) definiert ist, auf der Hülle (7) befindet.

4. Instrument nach einem der Ansprüche 2 oder 3, **dadurch gekennzeichnet, dass** der Bereich (4b) des zweiten Abschnitts (1d) des aktiven Teils (1b), der in der Nähe der Spitze (3) angeordnet ist, einen Massenmittelpunkt (mb) aufweist, der proportional näher an den der Drehachse (R) ist als der Massenmittelpunkt eines Bereichs des zweiten Abschnitts (1d), der auf der Rückseite des aktiven Teils (1b) angeordnet ist.

5. Instrument nach Anspruch 1, **dadurch gekennzeichnet, dass** der zweiten Abschnitt (1d) abwechselnd zentrierte Zonen (12), in denen jeder Bereich (402b) einen Massenmittelpunkt (m₄₀₂b) auf der Drehachse (R) aufweist und sich die mindestens zwei Schneidkanten (52, 54), die durch den Bereich (402b) definiert sind, auf der Hülle (7) befinden, und dezentrierte Zonen (11) aufweist, in denen jeder Bereich (401b) einen Massenmittelpunkt (m₄₀₁b) aufweist, der gegenüber der Drehachse (R) versetzt ist und mindestens eine Schneidkante (52, 54), die durch den Bereich (401b) definiert ist, im Inneren der Hülle (7) zurückgesetzt ist.

6. Instrument nach Anspruch 5, **dadurch gekennzeichnet, dass** die dezentrierten Zonen (11) zwischen ersten Zonen, in denen für jeden Bereich (401b) eine erste (52) der mindestens zwei Schneidkanten (52, 54), die durch den Bereich definiert sind, im Inneren der Hülle (7) zurückgesetzt angeordnet ist, während sich die zweite (54) der mindestens zwei Schneidkanten auf der Hülle (7) befindet, und zweiten Zonen wechseln, in denen für jeden Bereich die zweite (54) der mindestens zwei Schneidkanten (52), die durch den Bereich definiert sind, im Inneren der Hülle (7) zurückgesetzt angeordnet ist, während sich die erste (52) auf der Hülle (7) befindet.

7. Instrument nach einem der vorhergehenden Ansprüche, **dadurch gekennzeichnet, dass** der aktive Teil (1b) über seine gesamte Länge einen polygonalen Querschnitt mit rechter Seite aufweist.

8. Instrument nach einem der vorhergehenden Ansprüche, **dadurch gekennzeichnet, dass** der erste Abschnitt (1c) des aktiven Teils (1b) einen quadratischen Querschnitt aufweist und dass der zweite Abschnitt (1d) des aktiven Teils einen rechteckigen Querschnitt aufweist.

9. Instrument nach einem der vorhergehenden Ansprüche, **dadurch gekennzeichnet, dass** der erste Abschnitt (1c) des aktiven Teils (1b) eine Länge aufweist, die zwischen 1 und 3 Millimetern beträgt.

## Claims

1. Instrument for drilling dental root canals comprising a tapered rod (1) having over at least a part of its length, called the active part (1b), a polygonal cross-section (4) forming at least two cutting edges (5a, 5b; 52, 54), said active part (1b) terminating by a point (3) and being defined by an envelope (7) of a cylindrical or conical shape, the longitudinal axis of which coincides with the axis of rotation (R) of the instrument, said active part (1b) comprising a first portion (1c) extending from the point (3) and a second portion (1d) extending following the first portion (1c) towards the rear of the active part (1b); said instrument being **characterised by** the fact that any cross-section (4a; 4'a; 40a) of the first portion (1c) has a centre of mass (ma; m'a m₄₀a) located on the axis of rotation (R) and that said at least two cutting edges (5a, 5b; 52, 54) defined by said cross-section (4a; 4'a; 40a) are located on the envelope (7); and by the fact that at least one cross-section (4b; 4'b; 401b) of the second portion (1d) has a centre of mass (mb; m'b m₄₀₁b) offset with respect to the axis of rotation (R) and at least one cutting edge (5a; 52, 54) defined by said cross-section (4b; 4'b; 401b) is located set back within the envelope (7).

2. Instrument as claimed in claim 1, **characterised in that** any cross-section (4b; 4'b) of the second portion (1d) has a centre of mass (mb; m'b) offset with respect to the axis of rotation (R) and at least one cutting edge (5a) defined by said cross-section (4b; 4'b) is located set back within the envelope (7).

3. Instrument as claimed in claim 2, **characterised in that** exactly one cutting edge (5a) defined by any cross-section (4b) of the second portion (1d) of the active part (1b) is located on the envelope (7).

4. Instrument as claimed in any one of claims 2 or 3, **characterised in that** a cross-section (4b) of the second portion (1d) of the active part (1b) located close to the point (3) has a centre of mass (mb) proportionally closer to the axis of rotation (R) than the centre of mass of a cross-section of said second portion (1d) located at the rear of the active part (1b).

5. Instrument as claimed in claim 1, **characterised in that** the second portion (1d) has an alternating arrangement of centred zones (12) in which any cross-section (402b) has a centre of mass (m₄₀₂b) on the axis of rotation (R) and said at least two cutting edges (52, 54) defined by said cross-section (402b) are located on the envelope (7) and off-centre zones (11) in which any cross-section (401b) has a centre of mass (m₄₀₁b) offset with respect to said axis of rotation (R) and at least one cutting edge (52, 54) defined by said cross-section (401b) is located set back within the envelope (7).

6. Instrument as claimed in claim 5, **characterised in that** the off-centre zones (11) alternate between first zones in which for any cross-section (401b) a first (52) of the at least two cutting edges (52, 54) defined by said cross-section is located set back within the envelope (7) while the second (54) of the at least two cutting edges is located on the envelope (7) and second zones in which for any cross-section, the second (54) of the at least two cutting edges (52) defined by said cross-section is located set back within the envelope (7) while the first (52) is located on the envelope (7).

7. Instrument as claimed in any one of the preceding claims, **characterised in that** the active part (1b) has over its whole length a polygonal cross-section with straight sides.

8. Instrument as claimed in any one of the preceding claims, **characterised in that** the first portion (1c) of the active part (1b) has a square cross-section and that the second portion (1d) of the active part has a rectangular cross-section.

9. Instrument as claimed in any one of the preceding claims, **characterised in that** the first portion (1c) of the active part (1b) has a length between 1 and 3 millimetres.
